# EUROPEAN PATENT APPLICATION

(11) **EP 4 841 481 A1**
(43) Date of publication of application: **18.11.2026**
(21) Application number: 25861779.4
(22) Date of filing: 04.12.2025
(51) Int. Cl.: G06F 17/16

(54) **METHOD AND SYSTEM FOR COMPUTING VOLTAGE-ACTIVE POWER SENSITIVITY AT POWER SYSTEM NODES**

(30) Priority: 19.02.2025 CN 202510180740
(71) Applicant: Electric Power Research Institute of State Grid Shanxi Electric Power Co., Ltd, Taiyuan, Shanxi 030001 (CN); Zhejiang University, Hangzhou, Zhejiang 310030 (CN)
(72) Inventor: The designation of the inventor has not yet been filed
(74) Representative: Linage González, Rafael
(86) International application number: PCT/CN2025/140161
(87) International publication number: WO 2026/174899

(57) **Abstract**

A method and system for calculating node voltage-active power sensitivity of a power system, where the method includes: constructing an admittance matrix of multiple nonlinear nodes in the power system (101); inverting the admittance matrix of the nonlinear nodes to obtain an impedance matrix of the nonlinear nodes in the power system (102); determining a reactance matrix of the nonlinear nodes in the power system according to the impedance matrix of the nonlinear nodes as a first reactance matrix (103); constructing an approximate reactance matrix of the nonlinear nodes in the power system as a second reactance matrix (104); and determining a variation relationship between active power injected at each nonlinear node and a voltage at any nonlinear node in the power system according to the first reactance matrix and the second reactance matrix to determine voltage sensitivity of the each nonlinear node (105).

## Description

This application claims priority to Chinese Patent Application No. 202510180740.6 filed with the China National Intellectual Property Administration (CNIPA) on Feb. 19, 2025, the disclosure of which is incorporated herein by reference in its entirety.

### TECHNICAL FIELD

The present application relates to the field of power system operation control, for example, a method and system for calculating node voltage-active power sensitivity of a power system.

### BACKGROUND

Voltage-active power sensitivity refers to the degree of voltage change at a node or other nodes when the injected active power at the node changes in a power system, quantitatively describes how sensitive the voltage is to changes in certain active power, and plays a significant role in the planning, operation, and control of power systems. The voltage-active power sensitivity can help analyze the voltage stability of a power system, determine the mounting location and capacity of reactive power compensation equipment, evaluate the impact of different operating parameter changes on the voltage, and thus achieve optimized operation and effective voltage control in power systems.

Compared with conventional power systems dominated by synchronous generators, high-penetration renewable energy power systems exhibit more complex dynamic characteristics, particularly in terms of primary energy characteristics, the number and types of components, and time scales. During the transition from conventional power systems to modem power systems featuring high-penetration renewable energy, a variety of dynamic characteristics interact, making the dynamic processes especially complex. One of the main reasons why the connection of renewable energy power generation to a grid significantly impacts short-term voltage stability of the grid is that, as a source of an active power injection source, it typically does not provide any voltage support. Therefore, it is of great importance to explore the effects of active power injection variations at a renewable energy node on voltage amplitude and short-term voltage stability.

However, the research on how to calculate voltage-active power sensitivity in power systems is very limited, and the understanding of the impact on voltage amplitude and short-term voltage stability when the active power injection changes remains unclear. Therefore, an analytical method for calculating node voltage-active power sensitivity of a power system, which is suitable for voltage stability analysis, is urgently required.

### SUMMARY

The present application provides a method and system for calculating node voltage-active power sensitivity of a power system.

In a first aspect, the present application provides a method for calculating node voltage-active power sensitivity of a power system. The method includes the following steps.

An admittance matrix of multiple nonlinear nodes in the power system is constructed.

The admittance matrix of the nonlinear nodes is inverted to obtain an impedance matrix of the nonlinear nodes in the power system.

A reactance matrix of the nonlinear nodes in the power system is determined according to the impedance matrix of the nonlinear nodes as a first reactance matrix.

An approximate reactance matrix of the nonlinear nodes in the power system is constructed as a second reactance matrix.

A variation relationship between active power injected at each nonlinear node and a voltage at any nonlinear node in the power system is determined according to the first reactance matrix and the second reactance matrix to determine voltage sensitivity of each nonlinear node.

Optionally, the step where the admittance matrix of the nonlinear nodes in the power system is constructed includes the following step.

An expression of the admittance matrix Y_{CC} of the nonlinear node is constructed: ${Y}_{CC} = {Y}_{CC}^{0} - {Y}_{CN}^{0} {{Y}_{NN}^{0}}^{- 1} {Y}_{NC}^{0} .$

In the above expression, ${Y}_{CC}^{0}$ is an initial admittance matrix of the nonlinear nodes; ${Y}_{CN}^{0}$ is an initial mutual admittance matrix between the nonlinear nodes and multiple passive nodes; ${Y}_{NN}^{0}$ is an initial admittance matrix of the passive nodes; and ${Y}_{NC}^{0}$ is an initial mutual admittance matrix between the passive nodes and the nonlinear nodes.

Optionally, the step where the reactance matrix of the nonlinear nodes in the power system is determined according to the impedance matrix of the nonlinear nodes as the first reactance matrix includes the following step.

An expression of the first reactance matrix X_{CC} is constructed: ${X}_{CC} = Im \left({Z}_{CC}\right) .$

In the above expression, Im(·) represents an operation of taking an imaginary part of a complex number; Z_{CC} is the reactance matrix of the nonlinear nodes; and ${Z}_{CC} = {Y}_{CC}^{- 1}$, where Y_{CC} is the admittance matrix of the nonlinear nodes.

Optionally, the step where the approximate reactance matrix of the nonlinear nodes in the power system is constructed as the second reactance matrix includes the following step.

An expression of the second reactance matrix X̃_{CC} is constructed: ${{X}^{˜}}_{CC} = - Im \left[{diag}^{- 1}\left({\overline{V}}_{C}\right){\overline{Z}}_{CC}{diag}^{- 1}\left({V}_{C}\right)\right] .$

In the above expression, Im(·) represents an operation of taking an imaginary part of a complex number; diag⁻¹(·) represents inverting after a vector is converted into a diagonal matrix; V̅_{C} is a conjugate of a voltage vector V_{C} of the nonlinear nodes; and Z̅_{CC} is a conjugate of the impedance matrix Z_{CC} of the nonlinear nodes.

Optionally, the step where the variation relationship between the active power injected at each nonlinear node and the voltage at any nonlinear node in the power system is determined according to the first reactance matrix and the second reactance matrix to determine the voltage sensitivity of each nonlinear node includes the following steps.

A voltage V_{Ct} at a t-th nonlinear node in the power system and active power P_{Ct} injected at the t-th nonlinear node are acquired.

A voltage V_{Cp} at a p-th nonlinear node in the power system is acquired.

An expression of the variation relationship between the active power injected at each nonlinear node and the voltage at any nonlinear node is constructed: $\frac{\partial \left|{V}_{C}\right|}{\partial {P}_{C}} \left(p, q\right) = - {\sum }_{t = 1}^{n} {x}_{pt} {{x}^{˜}}_{tq} \left(\frac{Re \left({V}_{Cp}\right) Re \left({V}_{Ct}\right) + Im \left({V}_{Cp}\right) Im \left({V}_{Ct}\right)}{\left|{V}_{Cp}\right| {\left|{V}_{Ct}\right|}^{2}}\right) {P}_{Ct} .$

In the above expression, $\frac{\partial \left|{V}_{C}\right|}{\partial {P}_{C}} \left(p, q\right)$ represents a variation relationship between active power injected at the p-th nonlinear node and a voltage at a q-th nonlinear node; n is the total number of nonlinear nodes in the power system; xₚₜ is a mutual reactance between the p-th nonlinear node and the t-th nonlinear node; X̃_{tq} is an element in a t-th row and a q-th column of the second reactance matrix X̃_{CC} ; Re(·) represents an operation of taking a real part of a complex number; Im(·) represents an operation of taking an imaginary part of a complex number; and |·| represents a modulo operation.

In a second aspect, the present application provides a system for calculating node voltage-active power sensitivity of a power system. The system includes a first construction module, an inverting module, a first determination module, a second construction module, and a second determination module.

The first construction module is configured to construct an admittance matrix of nonlinear nodes in the power system.

The inverting module is configured to invert the admittance matrix of the nonlinear nodes to obtain an impedance matrix of the nonlinear nodes in the power system.

The first determination module is configured to determine a reactance matrix of the nonlinear nodes in the power system according to the impedance matrix of the nonlinear nodes as a first reactance matrix.

The second construction module is configured to construct an approximate reactance matrix of the nonlinear nodes in the power system as a second reactance matrix.

The second determination module is configured to determine a variation relationship between active power injected at each nonlinear node and a voltage at any nonlinear node in the power system according to the first reactance matrix and the second reactance matrix to determine voltage sensitivity of each nonlinear node.

Optionally, the first construction module includes a first construction unit.

The first construction unit is configured to construct an expression of the admittance matrix Y_{CC} of the nonlinear nodes: ${Y}_{CC} = {Y}_{CC}^{0} - {Y}_{CN}^{0} {{Y}_{NN}^{0}}^{- 1} {Y}_{NC}^{0} .$

In the above expression, ${Y}_{CC}^{0}$ is an initial admittance matrix of the nonlinear nodes; ${Y}_{CN}^{0}$ is an initial mutual admittance matrix between the nonlinear nodes and multiple passive nodes; ${Y}_{NN}^{0}$ is an initial admittance matrix of the passive nodes; and ${Y}_{NC}^{0}$ is an initial mutual admittance matrix between the passive nodes and the nonlinear nodes.

Optionally, the first determination module includes a second construction unit.

The second construction unit is configured to an expression of the first reactance matrix Xcc: ${X}_{CC} = Im \left({Z}_{CC}\right) .$

In the above expression, Im(·) represents an operation of taking an imaginary part of a complex number; Z_{CC} is the reactance matrix of the nonlinear nodes; and ${Z}_{CC} = {Y}_{CC}^{- 1}$, where Y_{CC} is the admittance matrix of the nonlinear nodes.

Optionally, the second construction module includes a third construction unit.

The third construction unit is configured to construct an expression of the second reactance matrix X̃_{CC}: ${{X}^{˜}}_{CC} = - Im \left[{diag}^{- 1}\left({\overline{V}}_{C}\right){\overline{Z}}_{CC}{diag}^{- 1}\left({V}_{C}\right)\right] .$

In the above expression, Im(·) represents an operation of taking an imaginary part of a complex number; diag⁻¹(·) represents inverting after a vector is converted into a diagonal matrix; V̅_{C} is a conjugate of a voltage vector V_{C} of the nonlinear nodes; and Z̅_{CC} is a conjugate of the impedance matrix Z_{CC} of the nonlinear nodes.

Optionally, the second determination module includes a first acquisition unit, a second acquisition unit, and a fourth construction unit.

The first acquisition unit is configured to acquire a voltage V_{Ct} at a t-th nonlinear node in the power system and active power P_{Ct} injected at the t-th nonlinear node.

The second acquisition unit is configured to acquire a voltage V_{Cp} at a p-th nonlinear node in the power system.

The fourth construction unit is configured to construct an expression of the variation relationship between the active power injected at each nonlinear node and the voltage at any nonlinear node: $\frac{\partial \left|{V}_{C}\right|}{\partial {P}_{C}} \left(p, q\right) = - {\sum }_{t = 1}^{n} {x}_{pt} {{x}^{˜}}_{tq} \left(\frac{Re \left({V}_{Cp}\right) Re \left({V}_{Ct}\right) + Im \left({V}_{Cp}\right) Im \left({V}_{Ct}\right)}{\left|{V}_{Cp}\right| {\left|{V}_{Ct}\right|}^{2}}\right) {P}_{Ct} .$

In the above expression, $\frac{\partial \left|{V}_{C}\right|}{\partial {P}_{C}} \left(p, q\right)$ represents a variation relationship between active power injected at the p-th nonlinear node and a voltage at a q-th nonlinear node; n is the total number of nonlinear nodes in the power system; xₚₜ is a mutual reactance between the p-th nonlinear node and the t-th nonlinear node; x̃_{tq} is an element in a t-th row and a q-th column of the second reactance matrix X̃_{CC}; Re(·) represents an operation of taking a real part of a complex number; Im(·) represents an operation of taking an imaginary part of a complex number; and |·| represents a modulo operation.

### BRIEF DESCRIPTION OF DRAWINGS

FIG. 1 is a flowchart of a method for calculating node voltage-active power sensitivity of a power system according to an embodiment of the present application.
FIG. 2 is a X̃_{CC} heat map of the voltage collapse test case from the China Electric Power Research Institute standard test system according to an embodiment of the present application.
FIG. 3 is a heat map of the voltage-active power sensitivity for the sending and receiving ends in the IEEE 4-machine 11-node system test case according to an embodiment of the present application.
FIG. 4 is a heat map of the voltage-active power sensitivity without nonlinear power sources according to an embodiment of the present application.
FIG. 5 is a heat map of the voltage-active power sensitivity without nonlinear loads according to an embodiment of the present application.
FIG. 6 is a structure diagram of a system for calculating node voltage-active power sensitivity of a power system according to an embodiment of the present application.

### DETAILED DESCRIPTION

Solutions in the embodiments of the present application will be described in conjunction with the drawings in the embodiments of the present application. The embodiments described below are part, not all, of the embodiments of the present application.

### Embodiment one

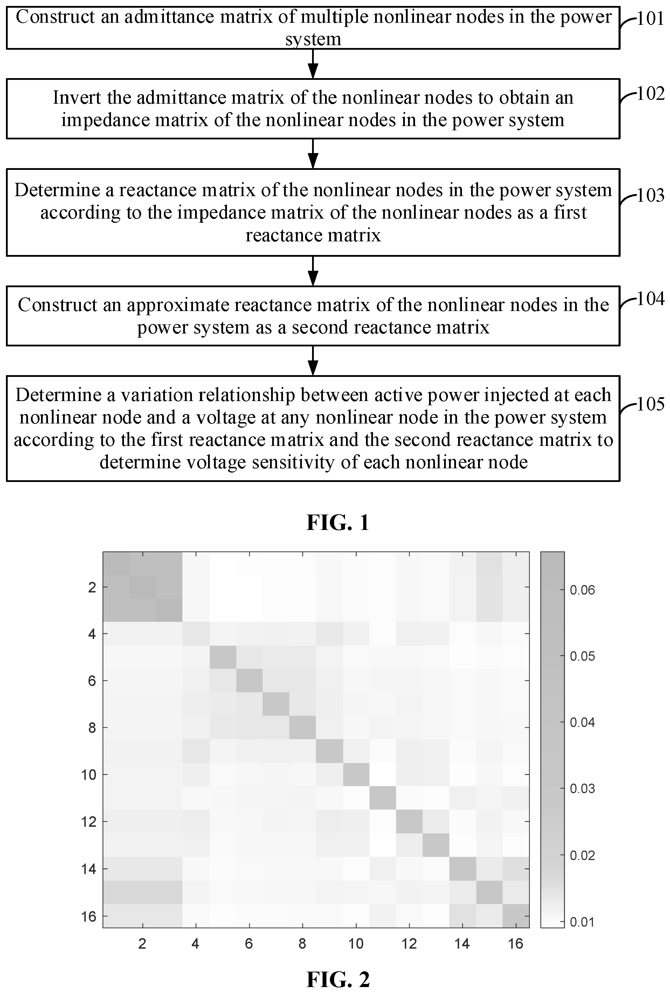

As shown in FIG. 1, this embodiment provides a method for calculating node voltage-active power sensitivity of a power system. The method includes steps 101 to 105.

In step 101, an admittance matrix of multiple nonlinear nodes in the power system is constructed.

In this embodiment, the nodes in the power system are classified into passive nodes (which have no injected current at such nodes), linear nodes (where the injection current expression of such nodes does not affect whether the original network equation has an explicit solution), and nonlinear nodes (where the injection current expression of such nodes affects whether the network equation has an explicit solution).

The constructed network equation is: $\left[\begin{matrix}{Y}_{SS}^{0} & {Y}_{SN}^{0} & {Y}_{SC}^{0} \\ {Y}_{NS}^{0} & {Y}_{NN}^{0} & {Y}_{NC}^{0} \\ {Y}_{CS}^{0} & {Y}_{CN}^{0} & {Y}_{CC}^{0}\end{matrix}\right] \left[\begin{matrix}{V}_{S} \\ {V}_{N} \\ {V}_{C}\end{matrix}\right] = \left[\begin{matrix}{I}_{S} \\ 0 \\ {\overline{S}}_{C} . / {\overline{V}}_{C}\end{matrix}\right] .$

In the above equation, ${Y}_{SS}^{0}$ is an initial admittance matrix of multiple linear nodes; ${Y}_{SN}^{0}$ is an initial mutual admittance matrix between the linear nodes and multiple passive nodes; ${Y}_{SC}^{0}$ is an initial mutual admittance matrix between the linear nodes and multiple nonlinear nodes; ${Y}_{NS}^{0}$ is an initial mutual admittance matrix between the passive nodes and the linear nodes; ${Y}_{NN}^{0}$ is an initial admittance matrix of the passive nodes; ${Y}_{NC}^{0}$ is an initial mutual admittance matrix between the passive nodes and the nonlinear nodes; ${Y}_{CS}^{0}$ is an initial mutual admittance matrix between the nonlinear nodes and the linear nodes; ${Y}_{CN}^{0}$ is an initial mutual admittance matrix between the nonlinear nodes and the passive nodes; ${Y}_{CC}^{0}$ is an initial admittance matrix of the nonlinear nodes; V_{S} is a voltage vector of the nonlinear nodes; V_{N} is a voltage vector of the passive nodes; V_{C} is a voltage vector of the nonlinear nodes; I_{S} is an injection current vector of the linear nodes; ./ represents element-wise division; S̅_{C} is a conjugate of the voltage vector V_{S} of the linear nodes; and V̅_{C} is a conjugate of the voltage vector V_{C} of the nonlinear nodes. In this embodiment, y̅ represents a conjugate of y.

With ${Y}_{CN}^{0}$ and ${Y}_{NC}^{0}$ as an example, if the dimension of ${Y}_{CN}^{0}$ is n × m, the dimension of ${Y}_{NC}^{0}$ is m × n.

The network equation is subjected to a Kron reduction to eliminate the passive nodes, and the order-reduced network equation is: $\left[\begin{matrix}{Y}_{SS} & {Y}_{SC} \\ {Y}_{CS} & {Y}_{CC}\end{matrix}\right] \left[\begin{matrix}{V}_{S} \\ {V}_{C}\end{matrix}\right] = \left[\begin{matrix}{I}_{S} \\ {\overline{S}}_{C} . / {\overline{V}}_{C}\end{matrix}\right] .$

In the above equation, Y_{SS} is an admittance matrix after order-reduction of ${Y}_{SS}^{0}$; ${Y}_{SS} = {Y}_{SS}^{0} - {Y}_{SN}^{0} {{Y}_{NN}^{0}}^{- 1} {Y}_{NS}^{0} ; {{ Y}_{NN}^{0}}^{- 1}$ represents inverting of ${Y}_{NN}^{0}$; Y_{SC} is an admittance matrix after order-reduction of ${Y}_{SC}^{0} ; {Y}_{SC} = {Y}_{SC}^{0} - {Y}_{SN}^{0} {{Y}_{NN}^{0}}^{- 1} {Y}_{NC}^{0} ; {{ Y}_{NN}^{0}}^{- 1}$ represents inverting of ${Y}_{NN}^{0}$; Y_{CS} is an admittance matrix after order-reduction of ${Y}_{CS}^{0} ; {Y}_{CS} = {Y}_{CS}^{0} - {Y}_{CN}^{0} {{Y}_{NN}^{0}}^{- 1} {Y}_{NS}^{0}$; and Y_{CC} is an admittance matrix after order-reduction of ${Y}_{CC}^{0} ; {Y}_{CC} = {Y}_{CC}^{0} - {Y}_{CN}^{0} {{Y}_{NN}^{0}}^{- 1} {Y}_{NC}^{0}$.

An expression of the admittance matrix Y_{CC} of the nonlinear nodes is constructed: ${Y}_{CC} = {Y}_{CC}^{0} - {Y}_{CN}^{0} {{Y}_{NN}^{0}}^{- 1} {Y}_{NC}^{0} ;$

In the above expression, ${Y}_{CC}^{0}$ is an initial admittance matrix of the nonlinear nodes; ${Y}_{CN}^{0}$ is an initial mutual admittance matrix between the nonlinear nodes and multiple passive nodes; ${Y}_{NN}^{0}$ is an initial admittance matrix of the passive nodes; and ${Y}_{NC}^{0}$ is an initial mutual admittance matrix between the passive nodes and the nonlinear nodes.

In step 102, the admittance matrix of the nonlinear nodes is inverted to obtain an impedance matrix of the nonlinear nodes in the power system.

In this embodiment, the impedance matrix of the nonlinear nodes in the power system is denoted as Z_{CC,} where ${Z}_{CC} = {Y}_{CC}^{- 1}$ and Y_{CC} is the admittance matrix of the nonlinear nodes.

In step 103, a reactance matrix of the nonlinear nodes in the power system is determined according to the impedance matrix of the nonlinear nodes as a first reactance matrix.

In this embodiment, the expression of the constructed first reactance matrix X_{CC} is: ${X}_{CC} = Im \left({Z}_{CC}\right) .$

In the above expression, Im(·) represents an operation of taking an imaginary part of a complex number.

In step 104, an approximate reactance matrix of the nonlinear nodes in the power system is constructed as a second reactance matrix.

For example, the expression of the constructed second reactance matrix X̃_{CC} is: ${{X}^{˜}}_{CC} = - Im \left[{diag}^{- 1}\left({\overline{V}}_{C}\right){\overline{Z}}_{CC}{diag}^{- 1}\left({V}_{C}\right)\right] .$

In the above expression, Im(·) represents an operation of taking an imaginary part of a complex number; diag⁻¹(·) represents inverting after a vector is converted into a diagonal matrix; V̅_{C} is a conjugate of a voltage vector V_{C} of the nonlinear nodes; and Z̅_{CC} is a conjugate of the impedance matrix Z_{CC} of the nonlinear nodes.

In step 105, a variation relationship between active power injected at each nonlinear node and a voltage at any nonlinear node in the power system is determined according to the first reactance matrix and the second reactance matrix to determine voltage sensitivity of each nonlinear node.

The following equations may be derived from the reduced-order network equation: ${Y}_{CC} {V}_{C} = {\overline{S}}_{C} . / {\overline{V}}_{C} - {Y}_{CS} {V}_{S} ;$ $diag \left({\overline{V}}_{C}\right) {Y}_{CC} {V}_{C} + diag \left({\overline{V}}_{C}\right) {Y}_{CS} {V}_{S} = {\overline{S}}_{C} .$

The above equations in this step are linearized below.

Assuming the node power changes from S_{C} to S_{C} + ΔS_{C}, the voltage correspondingly changes from V_{C} to V_{C} + ΔV_{C}, and then the following equation is yielded: $\begin{matrix}diag \left({\overline{V}}_{C}+Δ{\overline{V}}_{C}\right) {Y}_{CC} \left({V}_{C}+{ΔV}_{C}\right) + diag \left({\overline{V}}_{C}+Δ{\overline{V}}_{C}\right) {Y}_{CS} {V}_{S} = {\overline{S}}_{C} \\ ⇒ diag \left({\overline{V}}_{C}\right) {Y}_{CC} {V}_{C} + diag \left({\overline{V}}_{C}\right) {Y}_{CC} {ΔV}_{C} + diag \left(Δ{\overline{V}}_{C}\right) {Y}_{CC} {V}_{C} \\ + diag \left(Δ{\overline{V}}_{C}\right) {Y}_{CC} {ΔV}_{C} + diag \left({\overline{V}}_{C}+Δ{\overline{V}}_{C}\right) {Y}_{CS} {V}_{S} = {\overline{S}}_{C} + Δ {\overline{S}}_{C} \\ ⇒ diag \left({\overline{V}}_{C}\right) {Y}_{CC} {ΔV}_{C} + diag \left(Δ{\overline{V}}_{C}\right) {Y}_{CC} {V}_{C} + diag \left(Δ{\overline{V}}_{C}\right) {Y}_{CC} {ΔV}_{C} \\ + diag \left(Δ{\overline{V}}_{C}\right) {Y}_{CS} {V}_{S} = Δ {\overline{S}}_{C} .\end{matrix}$

Further, with the second-order terms neglected, the following equation may be yielded: $diag \left({\overline{V}}_{C}\right) {Y}_{CC} Δ {V}_{C} + diag \left(Δ {\overline{V}}_{C}\right) {Y}_{CC} {V}_{C} + diag \left(Δ {\overline{V}}_{C}\right) {Y}_{CS} {V}_{S} = Δ {\overline{S}}_{C} .$

In this embodiment, by replacing diag(V̅_{C})Y_{CC} with M and Y_{CC}V_{C}+ Y_{CS}V_{S} with I_{C}, the following equation is yielded: ${MΔV}_{C} + diag \left({I}_{C}\right) Δ {\overline{V}}_{C} = Δ {\overline{S}}_{C} .$

For any two complex numbers z and w, the following equations are derived: $\left\{\begin{matrix}\overline{z + w} = \overline{z} + \overline{w} \\ \overline{z w} = \overline{z} \overline{w}\end{matrix}\right. .$

Therefore, the following equation may be yielded: $\overline{M} Δ {\overline{V}}_{C} + diag \left({\overline{I}}_{C}\right) {ΔV}_{C} = {ΔS}_{C} .$

Further, the following equation may be yielded: $\left\{\begin{matrix}Δ {V}_{C} = {A}^{- 1} b \\ A = {diag}^{- 1} \left({I}_{C}\right) M - {\overline{M}}^{- 1} diag \left({\overline{I}}_{C}\right) \\ b = {diag}^{- 1} \left({I}_{C}\right) Δ {\overline{S}}_{C} - {\overline{M}}^{- 1} {ΔS}_{C}\end{matrix}\right. .$

Let ΔS_{C} = ΔP_{C}, and then the following equation may be yielded: $\begin{matrix}b = \left({diag}^{- 1}\left({I}_{C}\right)-{\overline{M}}^{- 1}\right) {ΔP}_{C} \\ ⇒ {ΔV}_{C} = {A}^{- 1} b = {A}^{- 1} \left({diag}^{- 1}\left({I}_{C}\right)-{\overline{M}}^{- 1}\right) {ΔP}_{C} \\ ⇒ \frac{\partial {V}_{C}}{\partial {P}_{C}} = {A}^{- 1} \left({diag}^{- 1}\left({I}_{C}\right)-{\overline{M}}^{- 1}\right) .\end{matrix}$

Typically, since the magnitude of Y_{CC} is generally on the order of 10², the following equations may be yielded: $A \approx {diag}^{- 1} \left({I}_{C}\right) M ;$ $\begin{matrix}\frac{\partial {V}_{C}}{\partial {P}_{C}} = {\left({diag}^{- 1}\left({I}_{C}\right)M\right)}^{- 1} \left({diag}^{- 1}\left({I}_{C}\right)-{\overline{M}}^{- 1}\right) \\ = {Z}_{CC} {diag}^{- 1} \left({\overline{V}}_{C}\right) \left[I-diag\left({\overline{S}}_{C}\right){diag}^{- 1}\left({\overline{V}}_{C}\right){\overline{Z}}_{CC}{diag}^{- 1}\left({V}_{C}\right)\right] .\end{matrix}$

In the above equations, I is an identity matrix.

Further, with the resistance neglected, the following equation may be yielded: $\frac{\partial {V}_{C}}{\partial {P}_{C}} \approx {jX}_{CC} {diag}^{- 1} \left({\overline{V}}_{C}\right) \left[I-diag\left({\overline{S}}_{C}\right){diag}^{- 1}\left({\overline{V}}_{C}\right){\overline{Z}}_{CC}{diag}^{- 1}\left({V}_{C}\right)\right] .$

Further, since $\left|Im\left[{diag}^{- 1}\left({\overline{V}}_{C}\right){\overline{Z}}_{CC}{diag}^{- 1}\left({V}_{C}\right)\right]\right| ≫ \left|Re\left[{diag}^{- 1}\left({\overline{V}}_{C}\right){\overline{Z}}_{CC}{diag}^{- 1}\left({V}_{C}\right)\right]\right|$ and >> represents much greater than, the following equation may be yielded: $\frac{\partial {V}_{C}}{\partial {P}_{C}} \approx {jX}_{CC} {diag}^{- 1} \left({\overline{V}}_{C}\right) \left[I+jdiag\left({\overline{S}}_{C}\right){{X}^{˜}}_{CC}\right] .$

In the above equation, j represents an imaginary unit.

For any two complex numbers z and w, the following equation is derived: $\left\{\begin{matrix}\left|z\right| = \sqrt{{Re}^{2} \left(z\right) + {Im}^{2} \left(z\right)} \\ \frac{\partial \left|z\right|}{\partial w} = \frac{1}{\left|z\right|} \left(Re\left(z\right)\frac{\partial Re \left(z\right)}{\partial w}+Im\left(z\right)\frac{\partial Im \left(z\right)}{\partial w}\right)\end{matrix}\right. .$

Then the following equation is yielded: $\frac{\partial \left|{V}_{C}\right|}{\partial {P}_{C}} = \left[Re\left({V}_{C}\right)./\left|{V}_{C}\right|\right] . * Re \left(\frac{\partial {V}_{C}}{\partial {P}_{C}}\right) + \left[Im\left({V}_{C}\right)./\left|{V}_{C}\right|\right] . * Im \left(\frac{\partial {V}_{C}}{\partial {P}_{C}}\right) .$

In the above equation, Re(·) represents an operation of taking a real part of a complex number, and .* represents element-wise multiplication and follows the rules of MATLAB.

Therefore, by substituting the expression ∂V_{C}/∂P_{C} into ∂|V_{C}|/∂P_{C}, the following equation is yielded: $\frac{\partial \left|{V}_{C}\right|}{\partial {P}_{C}} \left(p, q\right) = - {\sum }_{t = 1}^{n} {x}_{pt} {{x}^{˜}}_{tq} \left(\frac{Re \left({V}_{Cp}\right) Re \left({V}_{Ct}\right) + Im \left({V}_{Cp}\right) Im \left({V}_{Ct}\right)}{\left|{V}_{Cp}\right| {\left|{V}_{Ct}\right|}^{2}}\right) {P}_{Ct} .$

For example, the step 105 includes the following steps.

A voltage V_{Ct} at a t-th nonlinear node in the power system and active power P_{Ct} injected at the t-th nonlinear node are acquired.

A voltage V_{Cp} at a p-th nonlinear node in the power system is acquired.

An expression of the variation relationship between the active power injected at each nonlinear node and the voltage at any nonlinear node is constructed: $\frac{\partial \left|{V}_{C}\right|}{\partial {P}_{C}} \left(p, q\right) = - {\sum }_{t = 1}^{n} {x}_{pt} {{x}^{˜}}_{tq} \left(\frac{Re \left({V}_{Cp}\right) Re \left({V}_{Ct}\right) + Im \left({V}_{Cp}\right) Im \left({V}_{Ct}\right)}{\left|{V}_{Cp}\right| {\left|{V}_{Ct}\right|}^{2}}\right) {P}_{Ct} .$

In the above expression, $\frac{\partial \left|{V}_{C}\right|}{\partial {P}_{C}} \left(p, q\right)$ represents a variation relationship between active power injected at the p-th nonlinear node and a voltage at a q-th nonlinear node, that is, the sensitivity of the voltage at the q-th nonlinear node to the active power injected at the p-th nonlinear node; n is the total number of nonlinear nodes in the power system; xₚₜ is a mutual reactance between the p-th nonlinear node and the t-th nonlinear node, that is, an element in a p-th row and a t-th column of the first reactance matrix X_{CC}; x̃_{tq} is an element in a t-th row and a q-th column of the second reactance matrix X̃_{CC}; Re(·) represents an operation of taking a real part of a complex number; Im(·) represents an operation of taking an imaginary part of a complex number; and |·| represents a modulo operation.

When the characteristics of X̃_{CC} are validated, the voltage collapse test case from the China Electric Power Research Institute standard test system is employed. The synchronous generators adopt a constant transient electromotive force model with a transient reactance of 0.1 each, and the loads are of constant power type. According to the expression of X̃_{CC}, calculations are performed, and a heat map is plotted, as shown in FIG. 2. FIG. 2 illustrates the properties of X̃_{CC}, which is a block diagonally dominant square matrix.

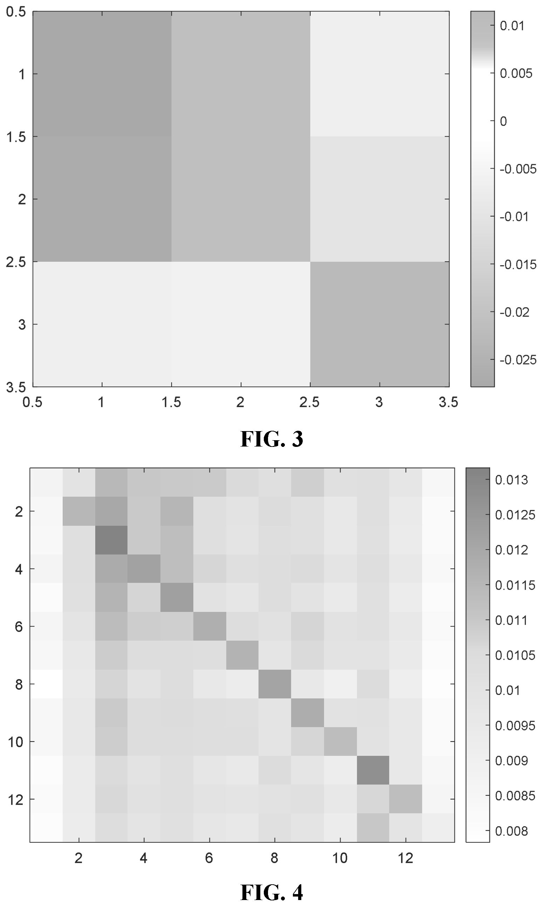

When this embodiment is validated using the sending-end and receiving-end system of the Institute of Electrical and Electronics Engineers (IEEE) 4-machine 11-node system test case (as shown in FIG. 3), the synchronous generators adopt a constant transient electromotive force model with a transient reactance of 0.3 each, the loads are of constant power type, the photovoltaic outer loop uses constant active power and constant reactive power control, and line resistance is neglected. Based on the original test case, the synchronous generator at the node 1 is replaced with a 300 MW photovoltaic power plant; a 100 MW photovoltaic power plant is added at the node 5; the original load at the node 7 is removed; and the output of the synchronous generator at the node 2 is adjusted to 300 MW. Calculation are performed on the sending-end and receiving-end system according to the calculation method provided in this embodiment, and the obtained results are shown in FIG. 3. The voltage-active power sensitivity matrix of the sending-end and receiving-end system is a block diagonally dominant matrix. The voltage-active power sensitivity of nodes corresponding to the sending-end system is negative, and the voltage-active power sensitivity of nodes corresponding to the receiving-end system is positive.

When this embodiment is validated using the voltage collapse test case from the China Electric Power Research Institute standard test system (as shown in FIG. 4), the synchronous generators adopt a constant transient electromotive force model, each having a transient reactance of 0.1, the loads are of constant power type and of constant impedance type, the photovoltaic outer loop uses constant active power and constant reactive power control, and line resistance is neglected.

FIG. 4 shows the heat map of the voltage-active power sensitivity without nonlinear power sources for the voltage collapse test case from the China Electric Power Research Institute standard test system. All 13 generators are set as synchronous generators, with a constant power load penetration rate of 40% and a constant impedance penetration rate of 60%. Calculation are performed on the voltage collapse test case from the China Electric Power Research Institute standard test system according to the calculation method provided in this embodiment, and the obtained results are shown in FIG. 4. The voltage-active power sensitivity matrix for the voltage collapse test case from the China Electric Power Research Institute standard test system is a block diagonally dominant matrix, and all voltage-active power sensitivities are positive.

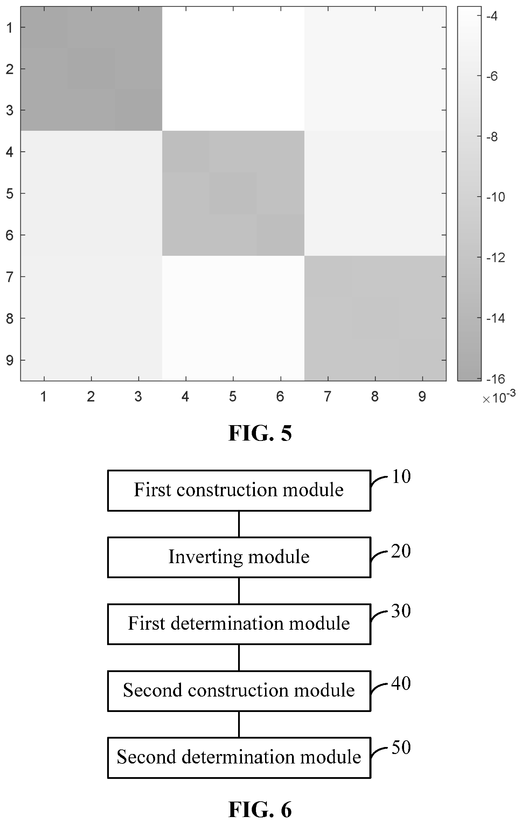

FIG. 5 shows the heat map of the voltage-active power sensitivity without nonlinear power sources for the voltage collapse test case from the China Electric Power Research Institute standard test system. 9 generators are set as synchronous generators, 4 generators are set as photovoltaic generators, and all loads are of constant impedance type. Calculation are performed on the voltage collapse test case from the China Electric Power Research Institute standard test system according to the calculation method provided in this embodiment, and the obtained results are shown in FIG. 5. The voltage-active power sensitivity matrix for the voltage collapse test case from the China Electric Power Research Institute standard test system is a block diagonally dominant matrix, and all voltage-active power sensitivities are negative.

In summary, the method for calculating node voltage-active power sensitivity of a power system provided in this embodiment focuses on the relationship between changes in active power injection and voltages. Based on network equations, the method can be used for transient voltage stability analysis. Furthermore, the method for calculating voltage-active power sensitivity in this embodiment is not limited to conventional power grids but is also applicable to grids with a high proportion of renewable energy, so the method demonstrates good adaptability and robustness. Finally, the effectiveness of the method is verified through MATLAB simulations.

### Embodiment two

Based on the same concept as Embodiment one, this embodiment provides a system for calculating node voltage-active power sensitivity of a power system. Since the principle of solving problems of the system is similar to the principle of solving problems of the method for calculating node voltage-active power sensitivity of a power system described in Embodiment one, the implementation of the system can be referred to the implementation of the method for calculating node voltage-active power sensitivity of a power system described in Embodiment one.

As shown in FIG. 6, the system for calculating node voltage-active power sensitivity of a power system includes a first construction module 10, an inverting module 20, a first determination module 30, a second construction module 40, and a second determination module 50.

The first construction module 10 is configured to construct an admittance matrix of multiple nonlinear nodes in the power system.

The inverting module 20 is configured to invert the admittance matrix of the nonlinear nodes to obtain an impedance matrix of the nonlinear nodes in the power system.

The first determination module 30 is configured to determine a reactance matrix of the nonlinear nodes in the power system according to the impedance matrix of the nonlinear nodes as a first reactance matrix.

The second construction module 40 is configured to construct an approximate reactance matrix of the nonlinear nodes in the power system as a second reactance matrix.

The second determination module 50 is configured to determine a variation relationship between active power injected at each nonlinear node and a voltage at any nonlinear node in the power system according to the first reactance matrix and the second reactance matrix to determine voltage sensitivity of each nonlinear node.

For example, the first construction module 10 includes a first construction unit.

The first construction unit is configured to construct an expression of the admittance matrix Y_{CC} of the nonlinear nodes: ${Y}_{CC} = {Y}_{CC}^{0} - {Y}_{CN}^{0} {{Y}_{NN}^{0}}^{- 1} {Y}_{NC}^{0} .$

In the above expression, ${Y}_{CC}^{0}$ is an initial admittance matrix of the nonlinear nodes; ${Y}_{CN}^{0}$ is an initial mutual admittance matrix between the nonlinear nodes and multiple passive nodes; ${Y}_{NN}^{0}$ is an initial admittance matrix of the passive nodes; and ${Y}_{NC}^{0}$ is an initial mutual admittance matrix between the passive nodes and the nonlinear nodes.

For example, the first construction module 30 includes a second construction unit.

The second construction unit is configured to an expression of the first reactance matrix Xcc: ${X}_{CC} = Im \left({Z}_{CC}\right) .$

In the above expression, Im(·) represents an operation of taking an imaginary part of a complex number; Z_{CC} is the reactance matrix of the nonlinear nodes; and ${Z}_{CC} = {Y}_{CC}^{- 1}$, where Y_{CC} is the admittance matrix of the nonlinear nodes.

For example, the second construction module 40 includes a third construction unit.

The third construction unit is configured to construct an expression of the second reactance matrix X̃_{CC}: ${{X}^{˜}}_{CC} = - Im \left[{diag}^{- 1}\left({\overline{V}}_{C}\right){\overline{Z}}_{CC}{diag}^{- 1}\left({V}_{C}\right)\right] .$

In the above expression, Im(·) represents an operation of taking an imaginary part of a complex number; diag⁻¹(·) represents inverting after a vector is converted into a diagonal matrix; V̅_{C} is a conjugate of a voltage vector V_{C} of the nonlinear nodes; and Z̅_{CC} is a conjugate of the impedance matrix Z_{CC} of the nonlinear nodes.

For example, the second determination module 50 includes a first acquisition unit, a second acquisition unit, and a fourth construction unit.

The first acquisition unit is configured to acquire a voltage V_{Ct} at a t-th nonlinear node in the power system and active power P_{Ct} injected at the t-th nonlinear node.

The second acquisition unit is configured to acquire a voltage V_{Cp} at a p-th nonlinear node in the power system.

The fourth construction unit is configured to construct an expression of the variation relationship between the active power injected at each nonlinear node and the voltage at any nonlinear node: $\frac{\partial \left|{V}_{C}\right|}{\partial {P}_{C}} \left(p, q\right) = - {\sum }_{t = 1}^{n} {x}_{pt} {{x}^{˜}}_{tq} \left(\frac{Re \left({V}_{Cp}\right) Re \left({V}_{Ct}\right) + Im \left({V}_{Cp}\right) Im \left({V}_{Ct}\right)}{\left|{V}_{Cp}\right| {\left|{V}_{Ct}\right|}^{2}}\right) {P}_{Ct} .$

In an expression, $\frac{\partial \left|{V}_{C}\right|}{\partial {P}_{C}} \left(p, q\right)$ represents a variation relationship between active power injected at the p-th nonlinear node and a voltage at a q-th nonlinear node; n is the total number of nonlinear nodes in the power system; xₚₜ is a mutual reactance between the p-th nonlinear node and the t-th nonlinear node; x̃_{tq} is an element in a t-th row and a q-th column of the second reactance matrix X̃_{CC}; Re(·) represents an operation of taking a real part of a complex number; Im(·) represents an operation of taking an imaginary part of a complex number; and |·| represents a modulo operation.

For more specific working procedures of the above-described variety of modules, reference may be made to the corresponding contents disclosed in Embodiment one, and the details are not repeated here.

The present application provides a method and system for calculating node voltage-active power sensitivity of a power system. The method focuses on the relationship between changes in active power injection and voltages and can be used for transient voltage stability analysis. Furthermore, the method for calculating voltage-active power sensitivity in the present application is not limited to conventional power grids but is also applicable to grids with a high proportion of renewable energy, so the method demonstrates good adaptability and robustness.

### Embodiment three

This embodiment provides a computer device. The computer device includes a processor and a memory. The processor, when executing a computer program stored in the memory, performs the method for calculating node voltage-active power sensitivity of a power system described in Embodiment one.

For more specific processes of the above-described method, reference may be made to the corresponding contents disclosed in Embodiment one, and the details are not repeated here.

### Embodiment four

This embodiment provides a computer-readable storage medium. The computer-readable storage medium is configured to store a computer program. The computer program, when executed by a processor, causes the processor to perform the method for calculating node voltage-active power sensitivity of a power system described in Embodiment one. The storage medium may be a non-transitory storage medium.

For more specific processes of the above-described method, reference may be made to the corresponding contents disclosed in Embodiment one, and the details are not repeated here.

### Embodiment five

This embodiment provides a computer program product. The computer program product includes computer-executable instructions or computer instructions. The computer-executable instructions or the computer instructions, when executed by a processor, cause the processor to perform the method for calculating node voltage-active power sensitivity of a power system described in Embodiment one.

For more specific processes of the above-described method, reference may be made to the corresponding contents disclosed in Embodiment one, and the details are not repeated here.

The multiple embodiments in the specification are described here in a progressive manner, with each embodiment focusing on the differences from other embodiments. For the identical or similar parts between the embodiments, reference may be made to one another. For the systems, devices, storage media, and computer program products disclosed in the embodiments, since they correspond to the methods disclosed in the embodiments, the descriptions are relatively brief, and relevant details may be referred to in the method sections.

The technology in the embodiments of the present application may be implemented by software in combination with a general-purpose hardware platform. The technical solutions in the embodiments of the present application may be embodied in the form of a software product. The software product may be stored in a storage medium, such as a read-only memory/random access memory (ROM/RAM), a magnetic disk, an optical disc and the like, and includes several instructions for causing a computer device (which may be a personal computer, a server, a network device, or the like) to perform the methods described in the multiple embodiments or certain parts of the embodiments of the present application.

In some embodiments, the computer-executable instructions may be in the form of programs, software, software modules, scripts, or codes, written in any form of programming language (including compiled or interpreted languages, or declarative or procedural languages), and deployed in any form, including as a stand-alone program or as a module, component, subroutine or other units suitable for use in a computing environment.

By way of example, the computer-executable instructions may, but do not necessarily, correspond to files in a file system, and may be stored in a portion of a file that holds other programs or data, for example, in one or more scripts of a Hyper Text Markup Language (HTML) document, in a single file dedicated to the program in question, or in multiple coordinated files (for example, files that store one or more modules, sub-programs, or portions of code).

By way of example, the computer-executable instructions may be deployed to be executed on one electronic device, on multiple electronic devices located at one site, or on multiple electronic devices distributed across multiple sites and interconnected by a communication network.

## Claims

1. A method for calculating node voltage-active power sensitivity of a power system, comprising:
constructing an admittance matrix of multiple nonlinear nodes in the power system;
inverting the admittance matrix of the nonlinear nodes to obtain an impedance matrix of the nonlinear nodes in the power system;
determining a reactance matrix of the nonlinear nodes in the power system according to the impedance matrix of the nonlinear nodes as a first reactance matrix;
constructing an approximate reactance matrix of the nonlinear nodes in the power system as a second reactance matrix, which comprises:
constructing an expression of the second reactance matrix X̃_{CC}: ${{X}^{˜}}_{CC} = - Im \left[{diag}^{- 1}\left({\overline{V}}_{C}\right){\overline{Z}}_{CC}{diag}^{- 1}\left({V}_{C}\right)\right] ;$
wherein Im(·) represents an operation of taking an imaginary part of a complex number; diag⁻¹(·) represents inverting after a vector is converted into a diagonal matrix; V̅_{C} is a conjugate of a voltage vector V_{C} of the nonlinear nodes; and Z̅_{CC} is a conjugate of the impedance matrix Z_{CC} of the nonlinear nodes; and
determining a variation relationship between active power injected at each nonlinear node and a voltage at any nonlinear node in the power system according to the first reactance matrix and the second reactance matrix to determine voltage sensitivity of the each nonlinear node, which comprises:
acquiring a voltage V_{Ct} at a t-th nonlinear node in the power system and active power P_{Ct} injected at the t-th nonlinear node;
acquiring a voltage V_{Cp} at a p-th nonlinear node in the power system; and
constructing an expression of the variation relationship between the active power injected at the each nonlinear node and the voltage at the any nonlinear node: $\frac{\partial \left|{V}_{C}\right|}{\partial {P}_{C}} \left(p, q\right) = - {\sum }_{t = 1}^{n} {x}_{pt} {{x}^{˜}}_{tq} \left(\frac{Re \left({V}_{Cp}\right) Re \left({V}_{Ct}\right) + Im \left({V}_{Cp}\right) Im \left({V}_{Ct}\right)}{\left|{V}_{Cp}\right| {\left|{V}_{Ct}\right|}^{2}}\right) {P}_{Ct} ;$
wherein $\frac{\partial \left|{V}_{C}\right|}{\partial {P}_{C}} \left(p, q\right)$ represents a variation relationship between active power injected at the p-th nonlinear node and a voltage at a q-th nonlinear node; n is a total number of nonlinear nodes in the power system; xₚₜ is a mutual reactance between the p-th nonlinear node and the t-th nonlinear node; x̃_{tq} is an element in a t-th row and a q-th column of the second reactance matrix X̃_{CC}; Re(·) represents an operation of taking a real part of a complex number; and |·| represents a modulo operation.

2. The method according to claim 1, wherein constructing the admittance matrix of the nonlinear nodes in the power system comprises:
constructing an expression of the admittance matrix Y_{CC} of the nonlinear nodes: ${Y}_{CC} = {Y}_{CC}^{0} - {Y}_{CN}^{0} {{Y}_{NN}^{0}}^{- 1} {Y}_{NC}^{0} ;$
wherein ${Y}_{CC}^{0}$ is an initial admittance matrix of the nonlinear nodes; ${Y}_{CN}^{0}$ is an initial mutual admittance matrix between the nonlinear nodes and multiple passive nodes; ${Y}_{NN}^{0}$ is an initial admittance matrix of the passive nodes; and ${Y}_{NC}^{0}$ is an initial mutual admittance matrix between the passive nodes and the nonlinear nodes.

3. The method according to claim 1, wherein determining the reactance matrix of the nonlinear nodes in the power system according to the impedance matrix of the nonlinear nodes as the first reactance matrix comprises:
constructing an expression of the first reactance matrix X_{CC}: ${X}_{CC} = Im \left({Z}_{CC}\right) ;$
wherein Im(·) represents an operation of taking an imaginary part of a complex number; Z_{CC} is the reactance matrix of the nonlinear nodes; and ${Z}_{CC} = {Y}_{CC}^{- 1}$, wherein Y_{CC} is the admittance matrix of the nonlinear nodes.

4. A system for calculating node voltage-active power sensitivity of a power system, comprising:
a first construction module, configured to construct an admittance matrix of multiple nonlinear nodes in the power system;
an inverting module, configured to invert the admittance matrix of the nonlinear nodes to obtain an impedance matrix of the nonlinear nodes in the power system;
a first determination module, configured to determine a reactance matrix of the nonlinear nodes in the power system according to the impedance matrix of the nonlinear nodes as a first reactance matrix;
a second construction module, configured to construct an approximate reactance matrix of the nonlinear nodes in the power system as a second reactance matrix, wherein the second construction module comprises:
a third construction unit, configured to construct an expression of the second reactance matrix X̃_{CC}: ${{X}^{˜}}_{CC} = - Im \left[{diag}^{- 1}\left({\overline{V}}_{C}\right){\overline{Z}}_{CC}{diag}^{- 1}\left({V}_{C}\right)\right] ;$
wherein Im(·) represents an operation of taking an imaginary part of a complex number; diag⁻¹(·) represents inverting after a vector is converted into a diagonal matrix; V̅_{C} is a conjugate of a voltage vector V_{C} of the nonlinear nodes; and Z̅_{CC} is a conjugate of the impedance matrix Z_{CC} of the nonlinear nodes; and
a second determination module, configured to determine a variation relationship between active power injected at each nonlinear node and a voltage at any nonlinear node in the power system according to the first reactance matrix and the second reactance matrix to determine voltage sensitivity of the each nonlinear node, wherein the second determination module comprises:
a first acquisition unit, configured to acquire a voltage V_{Ct} at a t-th nonlinear node in the power system and active power P_{Ct} injected at the t-th nonlinear node;
a second acquisition unit, configured to acquire a voltage V_{Cp} at a p-th nonlinear node in the power system; and
a fourth construction unit, configured to construct an expression of the variation relationship between the active power injected at the each nonlinear node and the voltage at the any nonlinear node: $\frac{\partial \left|{V}_{C}\right|}{\partial {P}_{C}} \left(p, q\right) = - {\sum }_{t = 1}^{n} {x}_{pt} {{x}^{˜}}_{tq} \left(\frac{Re \left({V}_{Cp}\right) Re \left({V}_{Ct}\right) + Im \left({V}_{Cp}\right) Im \left({V}_{Ct}\right)}{\left|{V}_{Cp}\right| {\left|{V}_{Ct}\right|}^{2}}\right) {P}_{Ct} ;$
wherein $\frac{\partial \left|{V}_{C}\right|}{\partial {P}_{C}} \left(p, q\right)$ represents a variation relationship between active power injected at the p-th nonlinear node and a voltage at a q-th nonlinear node; n is a total number of nonlinear nodes in the power system; xₚₜ is a mutual reactance between the p-th nonlinear node and the t-th nonlinear node; x̃_{tq} is an element in a t-th row and a q-th column of the second reactance matrix X̃_{CC}; Re(·) represents an operation of taking a real part of a complex number; and |·| represents a modulo operation.

5. The system according to claim 4, wherein the first construction module comprises:
a first construction unit, configured to construct an expression of the admittance matrix Y_{CC} of the nonlinear nodes: ${Y}_{CC} = {Y}_{CC}^{0} - {Y}_{CN}^{0} {{Y}_{NN}^{0}}^{- 1} {Y}_{NC}^{0} ;$
wherein ${Y}_{CC}^{0}$ is an initial admittance matrix of the nonlinear nodes; ${Y}_{CN}^{0}$ is an initial mutual admittance matrix between the nonlinear nodes and multiple passive nodes; ${Y}_{NN}^{0}$ is an initial admittance matrix of the passive nodes; and ${Y}_{NC}^{0}$ is an initial mutual admittance matrix between the passive nodes and the nonlinear nodes.

6. The system according to claim 4, wherein the first determination module comprises:
a second construction unit, configured to an expression of the first reactance matrix X_{CC}: ${X}_{CC} = Im \left({Z}_{CC}\right) ;$
wherein Im(·) represents an operation of taking an imaginary part of a complex number; Z_{CC} is the reactance matrix of the nonlinear nodes; and ${Z}_{CC} = {Y}_{CC}^{- 1}$, wherein Y_{CC} is the admittance matrix of the nonlinear nodes.
